# EUROPEAN PATENT SPECIFICATION

(11) **EP 2 941 950 B1**
(45) Date of publication and mention of the grant of the patent: **27.12.2017**
(21) Application number: 15164253.5
(22) Date of filing: 20.04.2015
(51) Int. Cl.: B65H 16/02, A01F 15/07

(54) **INDEXING WRAPPING SYSTEM AND SUPPORTING SYSTEMS**
INDIZIERENDES WICKELSYSTEM UND TRAGESYSTEME
SYSTÈME D'ENROULEMENT À INDEXATION ET SYSTÈMES DE SUPPORT

(30) Priority: 18.04.2014 US 201461981698 P
(43) Date of publication of application: 11.11.2015
(73) Proprietor: CNH Industrial Belgium nv, 8210 Zedelgem (BE)
(72) Inventor: Simmons, Scott C., Lititz, Pennsylvania 17543 (US)
(74) Representative: CNH Industrial IP Department

(56) References cited:
- EP-A1- 1 602 269
- EP-A1- 2 229 812
- EP-A1- 2 596 697
- US-B1- 6 651 408

## Description

### TECHNOLOGY FIELD

The present disclosure relates generally to a device and physical support article for the installation and storage of wrapping material in a harvester, particularly to multiple material support cylinders in a wrapping mechanism which hold rolls of wrapping material and revolves about a support axis in a plurality of positions, and to related supporting systems, including brake, lever plate, and drum lock system.

### BACKGROUND

For many years harvesters, such as agricultural balers, have been used to consolidate and package crop material so as to facilitate the storage and handling of the crop material for later use. Usually, a mower-conditioner cuts and conditions the crop material for windrow drying in the sun. When the cut crop material is properly dried, a harvester, such as a round baler, the most frequently used in the industry, travels along the windrows to pick up the crop material and form it into cylindrically-shaped round bales.

More specifically, the cut crop material is gathered at the front of the baler from along the ground, onto a pickup assembly, and introduced into a bale-forming chamber within the baler. Inside the cut crop is rolled up into a predetermined size. A conventional bale chamber may include a pair of opposing sidewalls with a series of belts, chains, and/or rolls that rotate and compress the crop material in to the cylindrically-shaped round bale. When the predetermined size is achieved, the cylindrically-shaped round bale is wrapped and bound by wrapping material, such as net wrapping, plastic wrapping, and/or wire. After the round bale is wrapped, the back of the baler, or tailgate, opens and the wrapped bale is discharged.

Wrapping material is fed into the baler off a wrapping material roll and into a wrapping mechanism, conventionally located in the front of the baler. As the baler forms, bounds, and distributes the bale, wrapping material is depleted until the roll needs to be replaced by a spare. Typically, one or two spare wrapping material rolls are stored on the baler, usually housed at the rear of the baler at the tailgate. When a roll of wrapping material needs to be replaced, the operator discards the depeted roll, walks to the back of the baler to acquire a stored roll, then walks the stored roll to the front of the baler, and installs the new roll. Wrapping material roll length typically measures 122 to 130 centimeters (48 to 51 inches) in length and between 30 and 45 kilograms (70 to 100 pounds) in weight. The size, weight, and typical location for spare roll storage create a burden for an operator to transport the roll from the rear of the baler and install the roll at the front of the baler. The operator is tasked to lift the roll to a material support cylinder and slide the roll onto the cylinder. The material support cylinder can be 4 to 5 feet off the ground. Additionally, once on the cylinder, the wrapping material roll is then pushed into the operating position. Thus, it is desireable to minimize operator effort to replace a roll of wrapping material. Relatedly, it is also desireable to improve storage capability of rolls of wrapping material on balers.

The invention relates to a storage location and a process for wrapping material roll indexing that minimizes manual operator effort for placement and access to wrapping material rolls in an active postions, and minimizes the time of total manual operator involvement when replacing and installing a roll of wrapping material. The purpose of the invention is to improve the efficiency of the baler operation by reducing the time it takes for a baler operator to replace a roll of warpping material.

### SUMMARY OF THE INVENTION

The invention relates to a wrapping mechanism comprising: at least two material support cylinders, extending between a first and a second support plate and in operable contact with at least one of the first and second support plates, the at least two material support cylinders rotatably mounted around a support axis; a mechanism support cylinder operably connected to the first and second support plates and positioned on the support axis between the first and the second support plates around which the at least two material support cylinders revolve in a plurality of radial positions; at least one drive mechanism operably connected to at least the first support plate such that the drive mechanism facilitates the revolution of the at least two material support cylinders from a first radial position to one of the plurality of radial positions around the support axis; a pair of oppositely facing frame plates, a lock mechanism, at least one feed roller, and a feed plate, the at least two material support cylinders are operably attached to at least the first support plate, the at least two material support cylinders are configured for supporting rolls of wrapping material and/or optionally loading or unloading a roll of wrapping material at the first radial position around the support axis, and at least one radial position of at least one material support cylinder is configured for dispensing wrapping material; wherein the wrapping mechanism further comprising a brake system comprising:
at least one elongated member comprising a longitudinal axis, that defines a linear axis around which at least a first, a second, and a third non-coaxial elements are capable of movement; at least one coaxial element that is capable of rotation around the linear axis;
a lever, operable in at least one engaged position and at least one or a plurality of disengaged positions, comprising at least a first and a second end, said first end proximate to and in operable contact with the elongated member, configured for rotational movement of the elongated member in the one or a plurality of disengaged positions; the first non-coaxial element extending transversely from the linear axis and attached to a least one counterwheel configured for exacting contact and pressure to a roll of wrapping material; the second non-coaxial element extending transversely from the linear axis comprising at least one end operably linked to the at least one coaxial element;
the third non-coaxial element extending transversely from the linear axis positioned at or proximate to one end of and operably linked to the at least one coaxial element and operably connected to at least one brake pad; a spring, positioned between the first and second non-coaxial elements, operably linking at least one end of the first and second non-coaxial elements.

Aspects of the invention also relate to a harvester comprising such a wrapping mechanism

Aspects of the invention further relate to a method of loading and unloading a roll of wrapping material onto the wrapping mechanism of such a harvester by moving the brake system to a disengaged position, moving the lever plate system to a disengaged position, pivoting at least one material support cylinder away from an axis upon which it rotates, and loading or unloading a roll of wrapping material onto the at least one material support cylinder.

### BRIEF DESCRIPTION OF THE DRAWINGS

FIG. 1 depicts a static image of a baler without multiple material support cylinder.
FIG. 2 depicts a diagram of a wrapping device without multiple material support cylinders.
FIG. 3 depicts an embodiment of a multi-cylinder wrapping mechanism.
FIG. 4 depicts an embodiment of a brake system in an engaged position.
FIG. 5 depicts an embodiment of a brake system in a disengaged position.
FIG. 6 depicts an embodiment of a lever plate system in a locked position.
FIG. 7 depicts an embodiment of a lever plate system in an unlocked position.
FIG. 8 depicts an embodiment of a brake system and lever plate system combined in a disengaged position.
FIG. 9 depicts an embodiment of a drum lock system with a drum wheel in place.
FIG. 10 depicts an embodiment of a drum lock system with a drum wheel removed.
FIG. 11 depicts an embodiment of a drum lock system from a top-down perspective.
FIG. 12A and 12B depict static images of an exemplary baler containing the multi-cylinder wrapping mechanism, including a brake system, a lever plate system, and a drum lock system.

### DETAILED DESCRIPTION OF THE INVENTION

Various terms relating to the methods and other aspects of the present invention are used throughout the specification and claims. Such terms are to be given their ordinary meaning in the art unless otherwise indicated. Other specifically defined terms are to be construed in a manner consistent with the definition provided herein.

As used in this specification and the appended claims, the singular forms "a," "an," and "the" include plural referents unless the content clearly dictates otherwise.

The term "more than 2" as used herein is defined as any whole integer greater than the number two, e.g. 3, 4, or 5.

The term "plurality" as used herein is defined as any amount or number greater or more than 1.

The term "harvester" as used herein is defined as a machine designed to consolidate and/or package material so as to facilitate the storage and handling of the material for later use. In some embodiments, the harvester is used to harvest agricultural material. In some embodiments, the harvester is an agricultural baler, a waste baler, or a combine comprising a baling mechanism.

The term "material" as used herein is defined as a numerous individual items that are harvested or collected by the harvester. In some embodiments, the material is agricultural crop, such as hay or cotton. In some embodiments, the material is biomass.

The term "harvesting assembly" as used herein is defined as an element responsible for collecting material from the ground over which the harvester operates. A harvesting assembly includes a mechanism to pick up the material from the ground, and such mechanisms are well known in the agricultural industry. Reference is made, for example, to U.S. Patent Application No. US20130305683 A1 that illustrates such mechanisms. The term "bale chamber" as used herein is defined as any space within the harvester that is capable of forming a bale of harvested material. In some embodiments, the sides of the bale chamber are defined by oppositely facing side walls and the bottom of the bale chamber is defined by at least one floor roll that spans transverse to the sidewalls and that partially supports the weight of the bale in the bale chamber. In some embodiments, the bale chamber is also defined in its front region by an inlet through which harvested material or crop enters. In some embodiments, the front region of a first bale chamber is defined by an inlet or entry point which is in operable connection to a throat of a crop harvesting assembly, such as a pickup or rotary cutter, and which is defined in a space between the first sidewall, the second sidewall, the bale carrier, and a plurality of rollers positioned between and attached to the first and second sidewalls; wherein the plurality of rollers support one or more baling belts. In some embodiments, at least one, at least two, at least three, or at least four floor rollers extend transverse to the opposite sidewalls along the bottom and front of the bale chamber adjacent to the top and bottom of the entry point. In some embodiments, a bale carrier is positioned in and defines the back of the bale chamber by obstructing an outlet in it fully closed position. In some embodiments, the rollers extending beyond the side walls allow the width of the bale chamber to be selectively increased. In some embodiments, side walls which can be moved laterally, i.e., in the direction of the width of the round baler, that enable making bales of different width or the friction between the walls and bale to be reduced when ejecting the bale. In some embodiments, the top portion of the bale chamber is define by the position of one or more baling belts that wrap around a top portion of the crop material as its rotating in the bale chamber. In some embodiments, the baling belts are mounted on a series of rolls positioned above the bale chamber that exact tension on a the bale as it grows.

The term "wrapping mechanism" as used herein is defined as a mechanical device or assembly that uses wrapping material to wrap a formed bale. In some embodiments, the net wrapping mechanism comprises at least two material support cylinders, a mechanism support cylinder, a first and a second support plate, at least one drive mechanism, a pair of oppositely facing frame plates, a lock mechanism, a brake system, at least one feed roller, and a feed plate. In some embodiments, the material support cylinders, mechanism support cylinder, and the first and second support plate can revolve around a support axis. In some embodiments, wrapping material is passed around the at least one feed roller through the feed plate. In some embodiments, the wrapping mechanism is positioned within the interior of a harvester.

The term "wrapping material" as used herein is defined as a net, mesh, twine, plastic film, or other material that is used for the wrapping of a bale in order to maintain the shape and density of said bale and optionally protect it from weather or other external conditions.

The term "material support cylinder" as used herein is defined as an elongated member, including, for example, a rod or tube configured for supporting a roll of wrapping material. In some embodiments, the roll of wrapping material is capable of rotating about the material support cylinder on the material support cylinder axis. In some embodiments, the material support cylinder is capable of pivoting away from a sidewall. In some embodiments, the material support cylinder is capable of pivoting away from the axis upon which the roll of wrapping material rotates when the material support cylinder is in its net wrapping position. In some embodiments, the material support cylinder is capable of pivoting away from a sidewall to a position where a roll of wrapping material may be loaded or unloaded from the material support cylinder. In some embodiments, the material support cylinder is not operably connected to a ramp-shaped lifting member or another type of member that can engage with a brake pad, brake arm, or another member of a brake system.

The term "mechanism support cylinder" as used herein is defined as a rod or tube configured for supporting elements of the wrapping mechanism. In some embodiments, the mechanism support cylinder supports a first and a second support plate, at least two material support cylinders, and optionally, at least two rolls of wrapping material mounted on the at least two material support cylinders. In some embodiments, the mechanism support cylinder rotates about a support axis.

The term "support plate" as used herein is defined as a notched, drilled or solid plate that is configured for the support of a material support cylinder. In some embodiments, the wrapping mechanism contains a first and a second support plate. In some embodiments, the first and the second support plate are operably attached to a mechanism support cylinder. In some embodiments, the first and the second support plate rotate around the support axis in a plurality of positions.

The term "support axis" as used herein is defined as a linear axis around which the material support cylinders of the wrapping mechanism revolve. In some embodiments, at least two support plates, and a mechanism support cylinder rotate around the support axis. In some embodiments, the mechanism support cylinder is positioned on the support axis.
For purposes of this specification, the term "rotate" means movement in a non-linear path about an internal axis. The term "revolve" movement in a non-linear path about central axis not necessarily positioned internally as compared to the moving object.

The term "drive mechanism" as used herein is defined as a device, assembly, or mechanism that facilitates the rotation and/or revolution of a support plate around the support axis. In some embodiments, the drive mechanism is a motor and/or mechanical drive device that facilitates the rotation and/or revolution of a support plate around the support axis. In some embodiments, the drive mechanism is a handle or type of gripping and/or assisting device that assists an operator in the manual revolution of a support plate around the support axis. In some embodiments, the drive mechanism drives the revolution of at least two material support cylinders around the support axis. In some embodiments, the drive mechanism drives the rotation of a first and a second support plate and a mechanism support cylinder around the support axis. In some embodiments, the drive mechanism is operated by and in electronic communication with a controller.

The term "brake system" as used herein is defined as a device or assembly that prevents the revolution of a roll of wrapping material around the support axis. In some embodiments the brake system is configured to apply and release variable tension to a roll of wrapping material supported on a material support cylinder, and controls the rate at which wrapping material is dispensed from a roll of wrapping material. In some embodiments, the brake system comprises a brake arm, a brake handle, a spring, a counter wheel, and a brake pad. In some embodiments, the brake system does not comprise an actuator for the movement of the brake pad. In some embodiments, the brake system does not comprise an actuator for the movement of any component of the brake system. In some embodiments, the brake system can be moved to a position where it does not prevent the revolution of a roll of wrapping material around the support axis.

Braking systems are known in the agricultural industry. Reference is made, for example, to U.S. Patent No 6,651,408 that illustrates such a system. While the primary purpose of such a system is to control the rate at which wrapping material is dispensed from a roll of wrapping material during the wrapping process, such systems are also static and incapable of moving to a position where it would not obstruct the revolution of the material support cylinders. Embodiments of the present invention require a brake system that is capable of both controlling the rate at which wrapping material is removed from a roll of wrapping material and moving to a position where the system will not obstruct the revolution of the material support cylinders during the indexing process.

The term "lock mechanism" as used herein is defined as a device or assembly that mechanically prevents the rotation of the mechanism support cylinder around the support axis. In some embodiments, the lock mechanism comprises a lock gear and a lock pin, wherein the lock pin may pass through one or a plurality of holes in the lock gear. In some embodiments, the lock gear is operably connected to a mechanism support cylinder. In some embodiments, the lock gear and mechanism support cylinder are rotatable about a support axis. In some embodiments, the lock gear is positioned between a support plate and frame plate, wherein the frame plate has one hole through which a lock pin may pass. In some embodiments, the lock pin passes through the one hole in the frame plate, and also through at least one hole in the lock gear that prevents the lock gear from rotating about a support axis.

The term "lever plate system" as used herein is defined as a device or assembly that mechanically prevents the pivoting of a material support cylinder away from the axis upon which it rotates. In some embodiments, the lever plate system prevents the pivoting of a material support cylinder away from the axis upon which it rotates and/or prevents the pivoting of a material support cylinder out of a notch in a support plate in which the material support cylinder occupies in a locked position. In some embodiments, the lever plate system comprises a lever plate that occludes the opening of the notch. In some embodiments, the lever plate is attached to the support plate by a pivot point. In some embodiments, the lever plate system also comprises a lever lock arm that locks the lever plate into a position that occludes the notch. In some embodiments, the lever plate and the lever lock arm are operably connected by a spring. In some embodiments, the lever plate system also comprises a lever release arm that is capable of moving the lever lock arm to a position where it does not lock the lever plate. In some embodiments, the lever release arm is attached to a brake system. In some embodiments, a wrapping mechanism comprises one or a plurality of notches, lever plates, and lever lock arms. In some embodiments, the wrapping mechanism comprises one lever release arm. In some embodiments, the wrapping mechanism comprises at least one lever release arm.

The term "drum lock system" as used herein is defined as a device or assembly that mechanically prevents the rotation of the material support cylinder around its own axis. In some embodiments, the drum lock system comprises a locking tab and a tension tab, wherein the locking tab may pass through one or a plurality of holes in a drum wheel of a material support cylinder. In some embodiments, the drum lock system comprises a locking tab and a tension tab, wherein the locking tab passes through one of at least two, three, four, five or six holes in a drum wheel of a material support cylinder. In some embodiments, the tension tab maintains a tension such that the locking tab is engaged with a drum wheel such that the material support cylinder may not rotate around its own axis. In some embodiments, the locking tab is operably connected to a support plate. In some embodiments, a cam tab positioned on a sidewall is capable of coming in operable contact with the locking tab as the support plate and material support cylinder rotate to a dispensing position. In some embodiments, the cam tab is capable of releasing the locking tab, allowing the material support cylinder to rotate around its axis.

Many of the fastening, connection, processes and other means and components utilized in this invention are widely known and used in the field of the invention described, and their exact nature or type is not necessary for an understanding and use of the invention by a person skilled in the art, and they will not therefore be discussed in significant detail. Furthermore, the various components shown or described herein for any specific application of this invention can be varied and the practice of a specific application of any element may already be widely known or used in the art by persons skilled in the art and each will likewise not therefore be discussed in significant detail.

Agricultural balers, such as round balers, are well known in the agricultural industry, and the instant invention can be used with substantially any of such machines. Reference is made, for example, to U.S. Patent Nos. 6,877,304; 6,688,092; 6,644,006 and 6,295,797 that illustrate such balers. Embodiments of the present invention are particularly well suited, but in no way limited to, use with agricultural balers. The present invention may also find utility in agricultural harvesters including, for example, a waste baler, a cotton harvester, or a combine. In some embodiments, the combine comprises a baling mechanism.

EP 1.602.269 discloses a baler having a bale wrapper attached to the baler. When the roll of wrapping material is finished, the empty roll is automatically replaced by a new roll using a quick-change assembly, whereby the new roll is advanced from a holding trailer to the spindle on which it needs to be mounted.

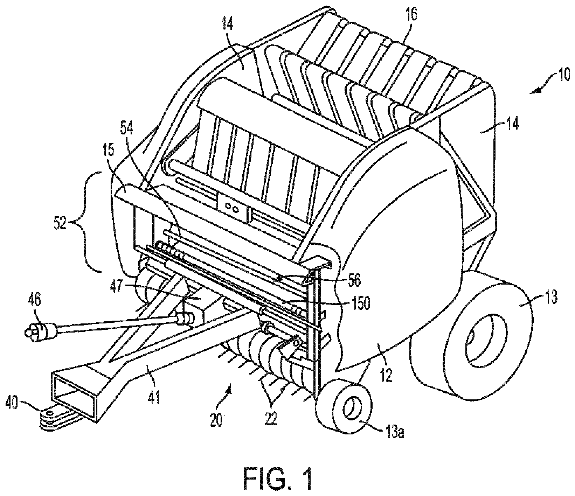

FIG. 1 depicts an example of a round baler. The round baler, generally designated 10 is enclosed by a main frame 12, comprising a plurality of rigid structural elements including a pair of side walls 14. Main frame 12 is supported by a pair of rear wheels 13. A forwardly mounted hitch 40, integrated with the main frame 12, provides for connection to a tractor, for examples. As shown, a power take off (PTO) shaft 46, is located herein about the hitch 40. In other balers, the PTO shaft may be located and connected to the tractor below the hitch. The PTO shaft draws energy from a tractor driving the hitch and transfer that energy to drive mechanisms in the baler 10. Rear side 16, typically comprises a tailgate what is closed during bailing and opened to eject finished bales. In conventional balers, storage to house spare rolls of wrapping material is typically located about the tailgate. The front side 15 of the baler faces the rear of a tractor as connected to by the hitch 40 and the PTO shaft 46. At the bottom of the front side, between a front pair of wheels 13a, and mounted to the mainframe 12, is the pickup 20. The pickup 20 is supported by the pair of front wheels 13a. Pickup tines 22 wrap around and connect within the pickup 20. The tips of the tines 22 are movable along a predetermined path along the ground to lift crop material from the ground and deliver it rearward along a generally horizontal path towards a floor roll (not shown) at the bottom of the later, which is rotatably mounted on main frame 12. During baling, the floor roll conveys crop material further rear into a bale chamber where belts then urge the material upwardly and forwardly into engagement with sledge rolls. The sledge rolls coil crop material in a round direction to form and add to a bale acre. Continued feeding by pick tines 22 urge additional crop material into the forming bale in a generally spiral fashion growing the bale core. A wrapping assembly 52 comprises an active roll cavity 54. When the baler is in use, the active roll cavity 54 would house a roll of wrapping material which would spin around a material support cylinder 150 as wrapping material is fed into a feeding entry 56.

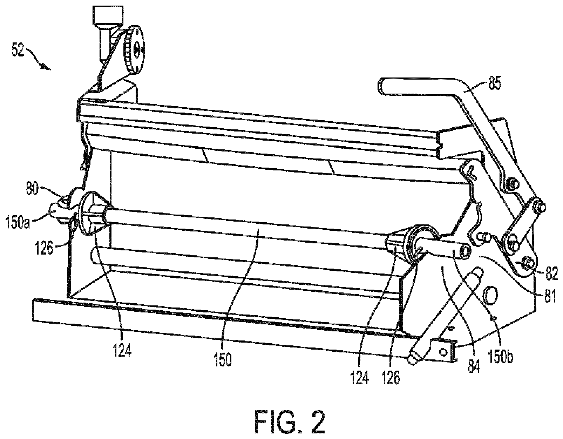

FIG.2 depicts a front-facing view of a material support cylinder 150 in a traditional wrapping assembly 52. The single material support cylinder 150 is capable of rotating towards and away from the wrapping assembly 52 by pivot connection 80 for the conventional installation of a wrapping material roll. The first end 150a of the material support cylinder 150 is connected to the pivot connection 80 and the other facing the arm lock connection 81. One some material support cylinders, guides 126 are placed along the cone base of the bearing, so that the bearing is forced flush against the guide when the bearing is installed into the opening of a roll of wrapping material. Some material support cylinders contain holes running linearly from the end of the support tube to the center. These often serve as connection points to place the guide 126 either closer or further from the center of the material support cylinder to enclose various sized (e.g. length) rolls of wrapping material.

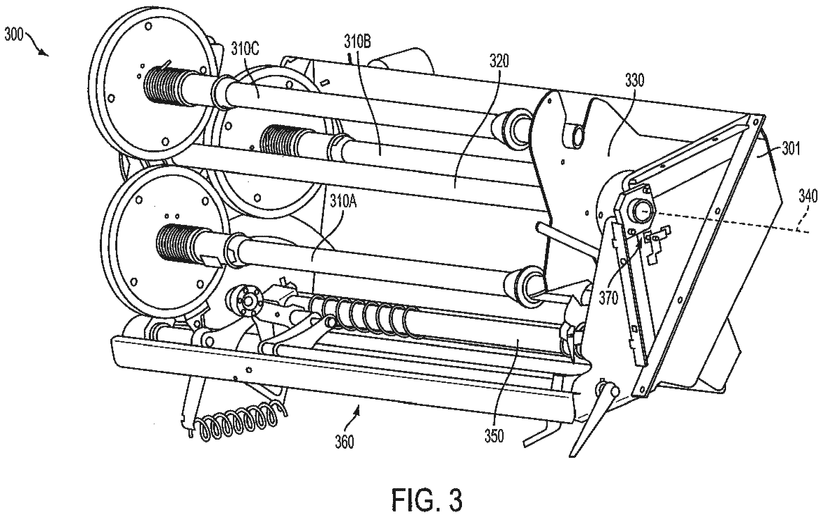

FIG. 3 depicts a wrapping mechanism, generally designated 300, that contains no rolls of wrapping material. A pair of frame plates, of which only one 301 is clearly visible, contain or support many of the elements of the wrapping mechanism, including three material support cylinders 310A, 310B and 310C, one mechanism support cylinder 320, and two support plates, of which only one 330 is clearly visible. The material support cylinders 310A, 310B, and 310C, the mechanism support cylinder 320, and the support plates 330 are all rotatable around a support axis 340. Other elements of the wrapping mechanism 300 include a feed roll 350, a brake system, generally designated 360, and a lock mechanism, generally designated 370. In this embodiment, the brake system 360 and lock mechanism 370 are shown in their first operable positions, which generally prevent the release of any material support cylinder or the rotation of any element around the support axis 340.

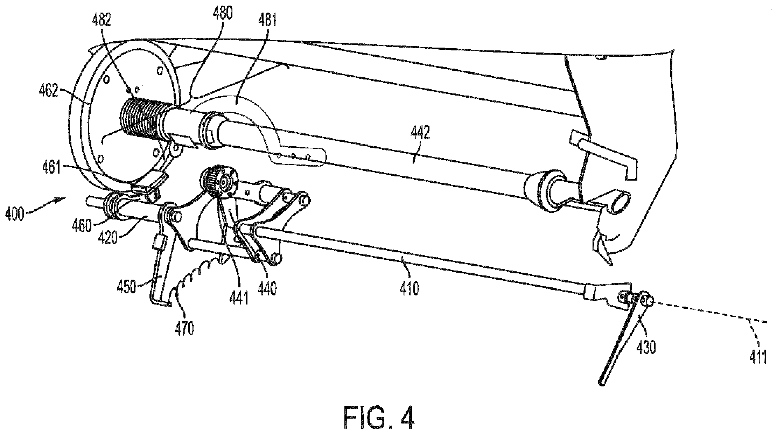

FIG. 4 depicts a brake system, generally designated 400, in an engaged position. An elongated member 410 defines a linear axis 411 that extends the length of the brake system. A coaxial element 420 is also on the linear axis 411. Connected to one end of the elongated member 410 is a lever 430 that is shown here in an engaged position. The brake system additionally consists of three non-coaxial elements. The first non-coaxial element 440 is not directly connected to either the elongated member 410 or the coaxial element 420, but it does support, in part, a counterwheel 441. The counterwheel 441 is designed to operably contact a roll of wrapping material (not shown) that is supported by a material support cylinder 442. The second non-coaxial element 450 is connected at one end to the coaxial element 420. The other end of the second non-coaxial element 450 is operably connected to the first non-coaxial element 440 by a spring 470, which translates the movement of the first non-coaxial element 440 to the second non-coaxial 450 element when the brake system 400 is in an engaged position. The third non-coaxial element 460 is connected to the coaxial element 420 at one end and to a brake pad 461 at the other end. The brake pad 461 is designed to operably contact a drum wheel 462 that is a part of the material support cylinder 442. The brake pad 461 is capable of applying pressure to the drum wheel 462, controlling, in part, the rotational speed of a roll of wrapping material on the material support cylinder 442. Optionally, the brake system 400 can also comprise a hooked element 480 that consists of a straight member 482 and a curved member 481. The hooked element 480 is connected to a feed plate of a wrapping system (not shown) at one end and to the coaxial element 420 at the other end.

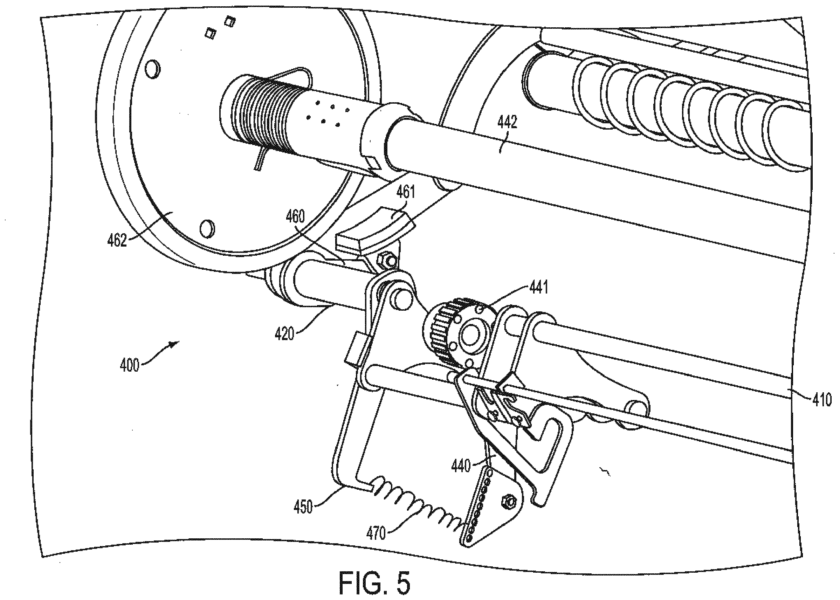

FIG. 5 depicts the brake system 400 in a disengaged position. The elongated member 410 has been rotated by the lever (not shown) such that the first non-coaxial element 440 has been moved downward and away from the material support cylinder 442, such that the counterwheel 441 would not come in operable contact with a roll of wrapping material if one where present on the material support cylinder 442. In the position shown, the first non-coaxial element 440 is closer to the second non-coaxial element 450, causing a loss of tension in the spring 470. The coaxial element 420 is thus allowed freer rotation, causing the brake pad 461 of the third non-coaxial element 460 to become disengaged with the drum wheel 462 and allowing rotation of the material support cylinder 442. The overall position of the brake system 400 shown here would also allow the revolution of one or a plurality of material support cylinders around a central support axis.

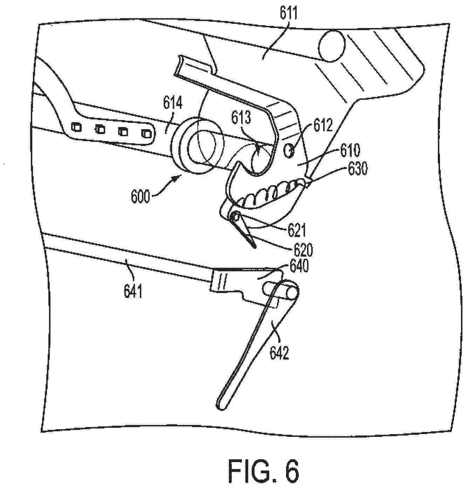

FIG. 6 depicts a lever plate system, generally designated 600, in a locked position. A lever plate 610 is connected to a support plate 611 at a pivot point 612 such that in the closed position shown here the lever plate 610 occludes an opening in a notch 613 of the support plate 611, said notch 613 being designed to hold one end of a material support cylinder 614. Preventing the rotation of the lever plate 610 is a lever lock arm 620 which is also connected to the support plate 611 by a separate pivot point 621. In its locked position shown here, the lever lock arm 620 is operably in contact with the lever plate 610, preventing the rotation of the lever plate 610 around its pivot point 612. Maintaining the lever lock arm 620 in its locked position is a spring 621 that is connected to both the lever lock arm 620 and the lever plate 610. A release arm 640, shown here in a disengaged position, is not in operable contact with the lever lock arm 620. In this embodiment, the release arm 640 is operably connected with the elongated member 641 of the brake system, and the movement of the release arm 640 is controlled by the lever 642.

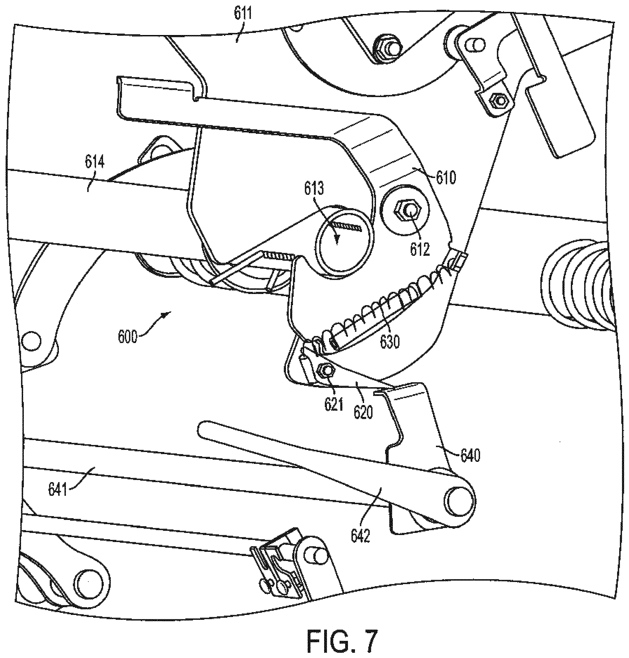

FIG. 7 depicts the lever plate system 600 in an unlocked position. The lever 642 has been rotated such that the lever release arm 640 is in a engaged position whereby it is in operable contact with the lever lock arm 620. The lever lock arm 620, in turn, has been pivoted around its pivot point 621 such that it is no longer in operable contact with the lever plate 610, as the force of the release arm 640 coming in contact with the lever lock arm 620 has overcome the retaining force of the spring 630. The lever plate 610 is now free to move around its pivot point 612, opening the notch 613 in the support plate 611 and allowing the material support cylinder 614 to pivot away from the notch 613.

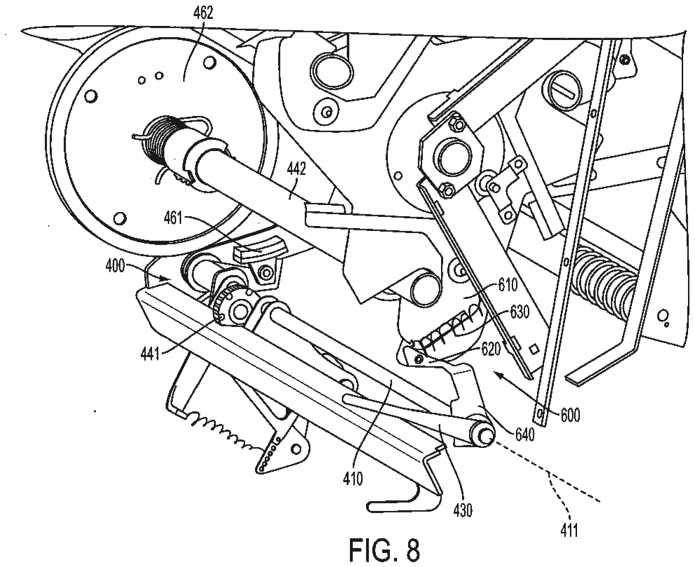

FIG. 8 depicts a combined brake system and lever plate system in a disengaged/unlocked position. The brake system 400 is as described in FIG. 4, with an elongated member 410 defining a linear axis 411. The lever 430 is in a disengaged position, moving the counterwheel 441 away from the material support cylinder 442, and moving the brake pad 461 away from the drum wheel 462. The position of the lever 430 also moved the release arm 640 of the lever plate system 600 to come in operable contact with lever lock arm 620 such that the lever plate 610 is free to move, allowing the material support cylinder 442 to pivot away from the support plate. The combination of the brake system 400 and the lever plate system 600 allows in part both the load/unloading of wrapping material onto the material support cylinder and the revolution of material support cylinder around the support axis of a multi-cylinder wrapping mechanism.

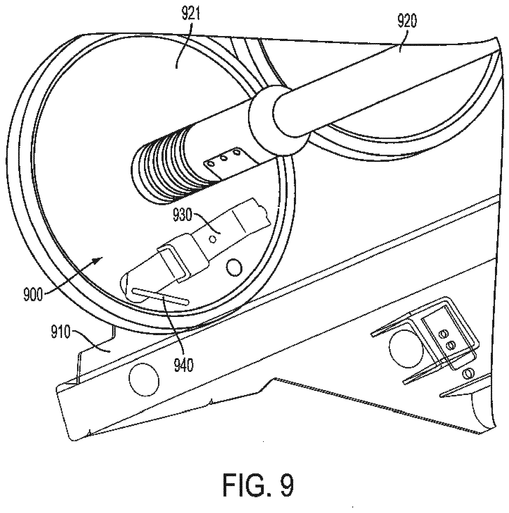

FIG. 9 depicts a drum lock system, generally designated 900, comprising a sidewall 910 and a material support cylinder 920 with a drum wheel 921. A locking tab mechanism 930 is operably attached to a support plate (not shown) at one end and the drum wheel 921 at the other end, preventing the rotation of the drum wheel around an axis defined by the material support cylinder 920. A cam tab 940 is operably attached to the sidewall 910 at a fixed position, such that when the material support cylinder 920 is in the proper position, the cam tab 940 comes in operable contact with the locking tab mechanism 930, releasing contact between the locking tab mechanism 930 and the drum wheel 921.

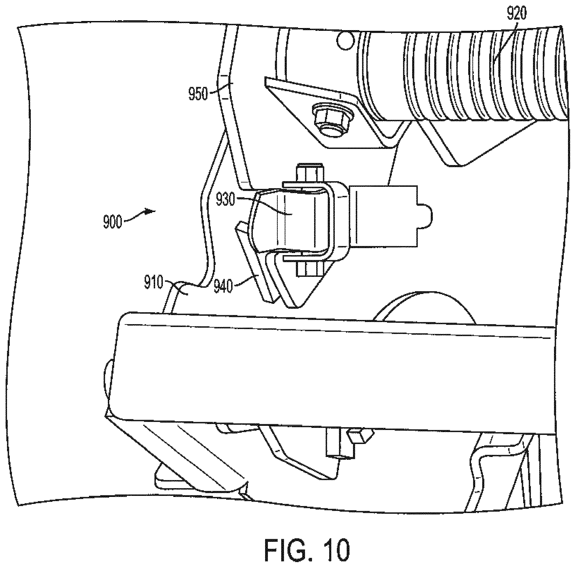

FIG. 10 depicts the drum lock system 900 with the representation of the drum wheel of the material support cylinder 920 removed to more accurately show the locking tab mechanism 930. The cam tab 940 is more clearly shown attached to the sidewall 910. The locking tab mechanism 930 is operably attached to the support plate 950. In this position, the material support cylinder would be capable of rotation.

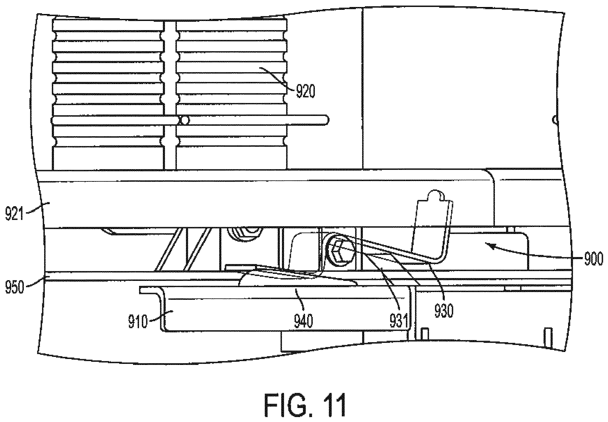

FIG. 11 depicts the drum lock system 900 from a top-down perspective. The cam tab 940 is shown operably connected with the sidewall 910. The material support cylinder 920 and drum wheel 921 are operable attached the support plate 950. In between the support plate 950 and the drum wheel 921 is the locking tab mechanism 930, shown here with a tension tab 931 which provides the force necessary to keep the locking tab mechanism 930 engaged with the drum wheel 921 when the locking tab mechanism 930 is not in operable contact with the cam tab 940.

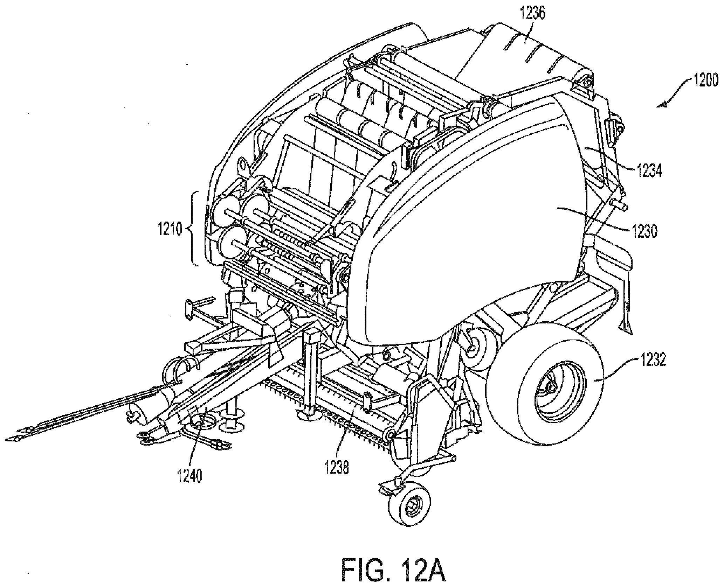

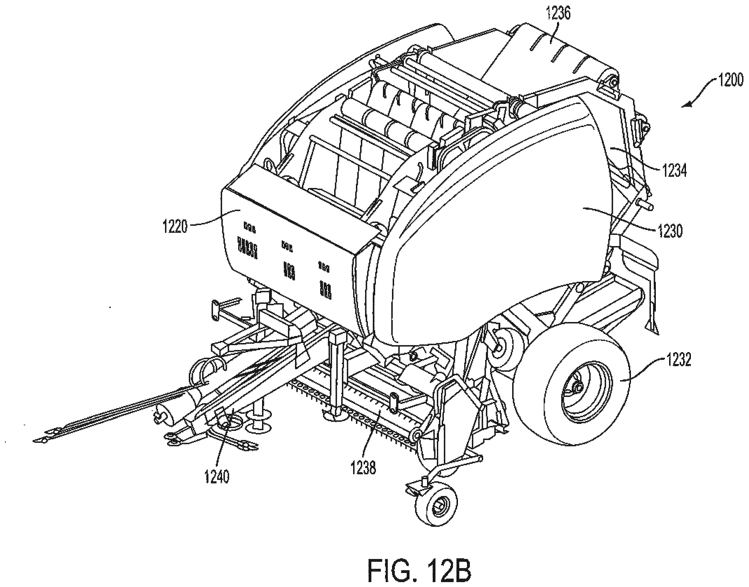

FIGs. 12A and 12B depict a static image of an exemplary round baler, generally designated 1200, containing the multi-cylinder wrapping mechanism generally described in FIGs. 3-11. The exemplary round baler 1200, similar to the round baler described in FIG. 1, comprises a main frame 1230 supported by a pair of rear wheels 1232, a pair of sidewalls 1234, a plurality of bailing belts 1236, a pickup mechanism 1238, and a forwardly mounted hitch 1240. In FIG. 12A, the exemplary round baler 1200 also contains the wrapping mechanism, generally designated 1210, in the forward section of the baler. In FIG. 12B, the exemplary round baler 400 is shown with an exterior access panel 1220 in a closed position covering the wrapping mechanism 1210. The disclosure relates to the contents of U.S. Patent Application 61/981706, filed April 18, 2014 and entitled Indexing Net Wrap System.

## Claims

1. A wrapping mechanism (300) comprising:
- at least two material support cylinders (310), extending between a first and a second support plate (330) and in operable contact with at least one of the first and second support plates (330), the at least two material support cylinders (310) rotatably mounted around a support axis (340);
- a mechanism support cylinder (320) operably connected to the first and second support plates (330) and positioned on the support axis (340) between the first and the second support plates (330) around which the at least two material support cylinders (310) revolve in a plurality of radial positions;
- at least one drive mechanism operably connected to at least the first support plate (330) such that the drive mechanism facilitates the revolution of the at least two material support cylinders (310) from a first radial position to one of the plurality of radial positions around the support axis (340);
- a pair of oppositely facing frame plates (301); a lock mechanism (370); at least one feed roller (350); and a feed plate; wherein the at least two material support cylinders (310) are operably attached to at least the first support plate (330); wherein the at least two material support cylinders (310) are configured for supporting rolls of wrapping material and/or optionally loading or unloading a roll of wrapping material at the first radial position around the support axis (340); and wherein at least one radial position of at least one material support cylinder (310) is configured for dispensing wrapping material; **characterised in that** the wrapping mechanism further comprises a brake system (360, 400) comprising:
at least one elongated member (410) comprising a longitudinal axis, that defines a linear axis (411) around which at least a first, a second, and a third non-coaxial elements (440, 450, and 460) are capable of movement;
at least one coaxial element that is capable of rotation around the linear axis (411);
a lever (430), operable in at least one engaged position and at least one or a plurality of disengaged positions, comprising at least a first and a second end, said first end proximate to and in operable contact with the elongated member (410), configured for rotational movement of the elongated member (410) in the one or a plurality of disengaged positions;
the first non-coaxial element (440) extending transversely from the linear axis (411) and attached to a least one counterwheel (441) configured for exacting contact and pressure to a roll of wrapping material;
the second non-coaxial element (450) extending transversely from the linear axis (411) comprising at least one end operably linked to the at least one coaxial element (420);
the third non-coaxial element (460) extending transversely from the linear axis (411) positioned at or proximate to one end of and operably linked to the at least one coaxial element(420) and operably connected to at least one brake pad (461);
a spring (470), positioned between the first and second non-coaxial elements (440, 450), operably linking at least one end of the first and second non-coaxial elements.

2. The wrapping mechanism of claim 1, wherein the spring (470) comprises a plurality of active positions and at least one non-active position; wherein in at least a first active position, the spring (470) maintains a tension between the first and second non-coaxial elements (440, 450) such that movement or motion in the first non-coaxial element (440) is transferred to the second non-coaxial element (450); and in at least the first non-active position, the spring (470) releases the tension between the first and second non-coaxial elements (440, 450).

3. The wrapping mechanism of any of claims 1 or 2 further comprising a hooked element (480) operably linked to one end of the at least one coaxial member (420) and comprising at least one curved member (481) and at least one straight member (482).

4. The wrapping mechanism of any of claims 1 through 3, wherein the at least one curved member (481) of the hooked element (480) is attached to a feed plate capable of movement between an active and a passive position; wherein the active position of the feed plate applies tension on the hooked element (480) such that the at least one coaxial element (420) rotates around the linear axis (411); and wherein the passive position of the feed plate does not apply tension or applies a limited amount of tension such that the at least one coaxial element (420) does not rotate around the linear axis (411).

5. The wrapping mechanism of claim any of claims 1-4, wherein the at least one coaxial element (420) is operably connected to the second non-coaxial element (450) and the third non-coaxial element (460); and wherein the at least one coaxial element (420), the second non-coaxial element (450), the third non-co axial element (460) are capable of synchronized rotation about the linear axis (411).

6. The wrapping mechanism of any of claims 1 - 5, wherein, when the lever (430) is in at least one engaged position, the at least one counterwheel (441) exacts pressure and tension to a roll of wrapping material positioned proximate to the counterwheel (441), and the at least one brake pad (461) exacts contact and pressure to a drum wheel (462) positioned proximate to the brake pad (461).

7. The wrapping mechanism of claim 6, wherein, when the lever (430) is in the at least one engaged position and the feed plate is in an active position, the at least one brake pad (461) does not exact contact and pressure to a drum wheel (462) proximate to the brake pad (461).

8. The wrapping mechanism of any of claims 6 or 7, wherein, when the lever (430) is in the at least one or a plurality of disengaged positions, the at least one counterwheel (441) does not exact contact and pressure to a roll of wrapping material positioned proximate to the counterwheel (441), and the at least one brake pad (461) does not exact contact and pressure to a drum wheel (462) positioned proximate to the brake pad (461).

9. The wrapping mechanism of claim 8, wherein, when the lever (430) moves from the at least one engaged position to the one or a plurality of disengaged positions, the at least one counterwheel (441) moves radially around the linear axis (411).

10. The wrapping mechanism of any of claims 8 or 9, wherein, when the lever (430) moves from the at least one engaged position to the one or a plurality of disengaged positions or when the feed plate is in the active position, the at least one brake pad (461) pivots around the linear axis (411).

11. The wrapping mechanism of any of claims 8 - 10 further comprising a fourth non-coaxial element (640) extending transversely from the linear axis, comprising at least one end that is operably attached to the at least one elongated member (641); wherein the fourth non-coaxial element is capable of radial movement around the linear axis when the lever (642) is moved from the at least one engaged position to the one or a plurality of disengaged positions.

12. The wrapping mechanism of any of claims 1-11 further comprising a drum lock system (900) comprising:
at least one sidewall (910);
at least one support plate (950);
at least one material support cylinder (920), operably connected to the at least one support plate (950), comprising a material support arm that defines a linear material axis, and at least one drum plate (921) positioned at or proximate to one end of and operably linked to the material support arm;
at least one locking tab mechanism (930), operably connected to the at least one support plate (950), comprising a locking tab (930) and a tension tab (931), configured for operable contact with the at least one drum plate (921); and
at least one cam tab (940), operably connected to the at least one sidewall (910), and configured for operable contact with the at least one locking tab mechanism.

13. The wrapping mechanism of any of claims 1-11 further comprising:
a lever plate system (600) comprising:
at least one lever plate (610) operably attached to at least one support plate (611) at a first pivot point (612), wherein the at least one lever plate (610) occludes an opening in at least one notch (613) in the at least one support plate (611) in a closed position and exposes the opening in at least one notch (613) in the at least one support plate (611) in an open position;
at least one lever lock arm (620), operably attached to the at least one support plate (611) at a second pivot point (621), that is in operable contact with the at least one lever plate (610) such that the at least one lever lock arm (620) prevents the at least one lever plate (610) from moving from its closed position to its open position in a locked position, and allows the at least one lever plate (610) to move from its closed position to its open position in a unlocked position;
at least one spring (621), operably connected to the at least one lever plate (610) and the at least one lever lock arm (620);
at least one release arm (640) configured for operable contact with the at least one lever lock arm (620); and
a drum lock system (900) comprising:
at least one sidewall (910);
at least one support plate (950);
at least one material support cylinder (920), operably connected to the at least one support plate (950), comprising a material support arm that defines a linear material axis, and at least one drum plate (921) positioned at or proximate to one end of and operably linked to the material support arm;
at least one locking tab mechanism (930), operably connected to the at least one support plate (950), comprising a locking tab (930) and a tension tab (931), configured for operable contact with the at least one drum plate (921); and
at least one cam tab (940), operably connected to the at least one sidewall (910), and configured for operable contact with the at least one locking tab mechanism.

14. The wrapping mechanism of any of claims 1 - 13 configured for reducing the speed or stopping movement of a at least one drum wheel (921) positioned proximate to the brake system (400) and oppositely facing at least one support plate (950) between which a material support cylinder (920) is positioned for mounting a roll of wrapping material, wherein the brake system is configured for reducing the speed or stopping movement of the roll of wrapping material in a plurality of engaged and disengaged conditions comprising:
a first engaged position whereby the lever (430) is in the at least one engaged position, the spring (470) is in an active position, the counterwheel (441) is in operable contact with the roll of wrapping material, the feed plate is in the passive position, and the brake pad (461) is in operable contact with the at least one drum wheel (462);
a first disengaged position whereby the lever (430) is in the at least one engaged position, the spring (470) is in an active position, the counterwheel (441) is in operable contact with the roll of wrapping material, the feed plate is in an active position, and the brake pad (461) is not in operable contact with the at least one drum wheel (462); and
a second disengaged position whereby the lever (430) is in the at least one disengaged position, the spring (470) is in a at least one passive position, the counterwheel (441) is not in operable contact with the roll of wrapping material, and the brake pad (461) is not in operable contact with the at least one drum wheel (462).

15. The wrapping mechanism of claim 14, wherein the roll of wrapping material exacts contact and pressure to the counterwheel (441) when the lever (430) is in the at least one engaged position, such that, as the roll of wrapping material is being dispensed, an amount of pressure being exerted to the counterwheel (441) is decreased, causing the brake pad (461) to exert less pressure on the drum wheel (462) of the material support cylinder (310), and allowing faster rotation of the roll of wrapping material and a steady amount of dispensing of the wrapping material.

16. A harvester comprising the wrapping mechanism of any of claims 1 - 15.

17. A method of loading and unloading a roll of wrapping material onto a wrapping mechanism of the harvester of claim 16 comprising:
(a) moving the brake system (400) to a disengaged position;
(b) moving a lever plate system (600) to a disengaged position;
(c) pivoting at least one material support cylinder (310) away from an axis upon which it rotates;
(d) loading or unloading a roll of wrapping material onto the at least one material support cylinder (310).

## Patentansprüche

1. Wickelmechanismus (300) mit:
- mindestens zwei Materialtragezylindern (310), die sich zwischen einer ersten und einer zweiten Trägerplatte (330) und in betriebsbereitem Kontakt mit mindestens einer der ersten und zweiten Trägerplatten (330) erstrecken, wobei die mindestens zwei Materialtragezylinder (310) drehbar um eine Trägerachse (340) angebracht sind;
- einem Mechanismustragezylinder (320), der betriebsbereit mit den ersten und zweiten Trägerplatten (330) verbunden ist und auf der Trägerachse (340) zwischen den ersten und zweiten Trägerplatten (330) angeordnet ist, um die sich die mindestens zwei Materialtragezylinder (310) in einer Mehrzahl von radialen Positionen drehen;
- mindestens einem Antriebsmechanismus, der betriebsbereit mit mindestens der ersten Trägerplatte (330) verbunden ist, sodass der Antriebsmechanismus die Drehung der mindestens zwei Materialtragezylinder (310) von einer ersten radialen Position zu einer der Mehrzahl von radialen Positionen um die Trägerachse (310) herum unterstützt;
- einem Paar von gegenüberliegenden Rahmenplatten (301); einem Verriegelungsmechanismus (379); mindestens einer Zuführwalze (350); und einer Zuführplatte; wobei die mindestens zwei Materialtragezylinder (310) betriebsbereit an mindestens der ersten Trägerplatte (330) befestigt sind; wobei die mindestens zwei Materialtragezylinder 310) dazu eingerichtet sind, in der ersten radialen Position um die Trägerachse (340) Rollen von Wickelmaterial zu tragen und/oder optional eine Rolle von Wickelmaterial zu laden oder zu entladen; und wobei mindestens eine radiale Position mindestens eines Materialtragezylinders (310) dazu eingerichtet ist, Wickelmaterial auszugeben;
**dadurch gekennzeichnet, dass** der Wickelmechanismus des Weiteren ein Bremssystem (360, 400) aufweist mit:
mindestens einem länglichen Element (410), das eine Längsachse aufweist, die eine Linearachse (411) definiert, um die sich mindestens ein erstes, ein zweites und ein drittes nicht-koaxiales Element (440, 450, und 460) bewegen können;
mindestens einem koaxialen Element, das zur Drehung um die Linearachse (411) eingerichtet ist;
einem Hebel (430), der in mindestens einer eingerasteten Position und mindestens einer oder einer Mehrzahl von gelösten Positionen betriebsbereit ist, der mindestens ein erstes und ein zweite Ende aufweist, wobei das erste Ende nahe an dem und in betriebsbereitem Kontakt mit dem länglichen Element (410) ist, wobei der Hebel für eine Drehbewegung des länglichen Elements (410) in der einen oder einer Mehrzahl von gelösten Positionen eingerichtet ist;
wobei das erste nicht-koaxiale Element (440) sich quer zu der Linearachse (411) erstreckt und an mindestens einem Gegenrad (441) befestigt ist, das dazu eingerichtet ist, Kontakt und Druck auf eine Rolle von Wickelmaterial auszuüben;
wobei sich das zweite nicht-koaxiale Element (450) quer zu der Linearachse (411) erstreckt und mindestens ein Ende aufweist, das betriebsbereit mit dem mindestens einen koaxialen Element (420) verbunden ist;
wobei das dritte nicht-koaxiale Element (460), das sich quer zu der Linearachse (411) erstreckt, an dem oder in der Nähe des einen Endes des mindestens einen koaxialen Elements (420) angeordnet und betriebsbereit damit verbunden ist und mit mindestens einem Bremsklotz (461) betriebsbereit verbunden ist;
einer Feder (470), die zwischen den ersten und zweiten nicht-koaxialen Elementen (440, 450) angeordnet ist, wobei die Feder mindestens ein Ende der ersten und zweiten nicht-koaxialen Elemente wirksam verbindet.

2. Wickelmechanismus nach Anspruch 1, wobei die Feder (470) eine Mehrzahl von aktiven Stellungen und mindestens eine nicht-aktive Stellung aufweist, wobei in mindestens einer ersten aktiven Stellung die Feder (470) eine Spannung zwischen den ersten und zweiten nicht-koaxialen Elementen (440, 450) aufrechterhält, sodass eine Bewegung in dem ersten nicht-koaxialen Element (440) auf das zweite nicht-koaxiale Element (450) übertragen wird; und wobei in mindestens der ersten nichtaktiven Stellung die Feder (470) die Spannung zwischen den ersten und zweiten nicht-koaxialen Elementen (440, 450) freigibt.

3. Wickelmechanismus nach einem der Ansprüche 1 oder 2, der des Weiteren ein Hakenelement (480) aufweist, das betriebsbereit mit einem Ende des mindestens einen koaxialen Elements (420) verbunden ist und mindestens einen gekrümmten Abschnitt (481) und mindestens einen geraden Abschnitt (482) aufweist.

4. Wickelmechanismus nach einem der Ansprüche 1 bis 3, wobei der mindestens eine gekrümmte Abschnitt (481) des Hakenelements (480) an einer Zuführungsplatte befestigt ist, die zur Bewegung zwischen einer aktiven und einer passiven Position eingerichtet ist; wobei die aktive Position der Zuführungsplatte eine Spannung auf das Hakenelement (480) ausübt, sodass das mindestens eine koaxiale Element (420) um die Linearachse (411) herum rotiert; und wobei die passive Position der Zuführungsplatte keine Spannung oder eine begrenzte Spannungsmenge ausübt, sodass das mindestens eine koaxiale Element (420) sich nicht um die Linearachse (411) herum dreht.

5. Wickelmechanismus nach einem der Ansprüche 1 bis 4, wobei das mindestens eine koaxiale Element (420) mit dem zweiten nicht-koaxialen Element (450) und dem dritten nicht-koaxialen Element (460) betriebsbereit verbunden ist; und wobei das mindestens eine koaxiale Element (420), das zweite nicht-koaxiale Element (450), das dritte nicht-koaxiale Element (480) zur synchronisierten Drehung um die Linearachse (411) herum geeignet sind.

6. Wickelmechanismus nach einem der Ansprüche 1 bis 5, wobei, wenn der Hebel (430) sich in der mindestens einen eingerasteten Position befindet, das mindestens eine Gegenrad (441) Druck und Spannung auf eine Rolle von Wickelmaterial ausübt, die in der Nähe des Gegenrads (441) angeordnet ist, und der mindestens eine Bremsklotz (461) einen Kontakt und Druck auf ein Trommelrad (462) ausübt, das in der Nähe des Bremsklotzes (461) angeordnet ist.

7. Wickelmechanismus nach Anspruch 6, wobei, wenn der Hebel (430) sich in der mindestens einen eingerasteten Position befindet und die Zuführungsplatte in einer aktiven Position ist, der mindestens eine Bremsklotz (461) keinen Kontakt und keinen Druck auf ein Trommelrad (462) in der Nähe des Bremsklotzes (461) ausübt.

8. Wickelmechanismus nach einem der Ansprüche 6 oder 7, wobei, wenn der Hebel (430) sich in der mindestens einen oder einer Mehrzahl von gelösten Positionen befindet, das mindestens eine Gegenrad (441) keinen Kontakt und keinen Druck auf eine Rolle von Wickelmaterial ausübt, das in der Nähe des Gegenrads (441) angeordnet ist, und der mindestens eine Bremsklotz (461) keinen Kontakt und keinen Druck auf ein Trommelrad (462) ausübt, das in der Nähe des Bremsklotzes (461) angeordnet ist.

9. Wickelmechanismus nach Anspruch 8, wobei, wenn der Hebel (430) sich von der mindestens einen eingerasteten Position zu der einen oder einer Mehrzahl von gelösten Positionen bewegt, das mindestens eine Gegenrad (441) sich radial um die Linearachse (411) bewegt.

10. Wickelmechanismus nach einem der Ansprüche 8 oder 9, wobei, wenn der Hebel (430) sich von der mindestens einen eingerasteten Position zu der einen oder einer Mehrzahl von gelösten Positionen bewegt, oder wenn die Zuführungsplatte sich in der aktiven Position befindet, der mindestens eine Bremsklotz (461) um die Linearachse (411) schwenkt.

11. Wickelmechanismus nach einem der Ansprüche 8 bis 10, der des Weiteren ein viertes nicht-koaxiales Element (640) aufweist, das sich quer zu der Linearachse erstreckt und mindestens ein Ende aufweist, das betriebsbereit an dem mindestens einen länglichen Element (641) befestigt ist; wobei das vierte nicht-koaxiale Element dazu eingerichtet ist, sich radial um die Linearachse herum zu bewegen, wenn der Hebel (642) von der mindestens einen eingerasteten Position zu der einen oder einer Mehrzahl von gelösten Positionen bewegt wird.

12. Wickelmechanismus nach einem der Ansprüche 1 bis 11, der des Weiteren ein Trommelverriegelungssystem (900) aufweist, mit:
mindestens einer Seitenwand (910);
mindestens einer Trägerplatte (950);
mindestens einem Materialtragezylinder (920), der betriebsbereit mit der mindestens einen Trägerplatte (950) verbunden ist und einen Materialtragarm, der eine lineare Materialachse definiert, und mindestens eine Trommelplatte (921) aufweist, die an oder nahe bei einem Ende des Materialtragarms angeordnet und betriebsbereit mit diesem verbunden ist;
mindestens einem Verriegelungsstreifenmechanismus (930), der betriebsbereit mit der mindestens einen Trägerplatte (950) verbunden ist und einen Verriegelungsstreifen (930) und einen Spannstreifen (931) aufweist, die zum betriebsbereiten Kontakt mit der mindestens einen Trommelplatte (921) eingerichtet sind; und
mindestens einem Nockenstreifen (940), der betriebsbereit mit der mindestens einen Seitenwand (910) verbunden ist und für den betriebsbereiten Kontakt mit dem mindestens einen Verriegelungsstreifenmechanismus eingerichtet ist.

13. Wickelmechanismus nach einem der Ansprüche 1 bis 11, der des Weiteren aufweist:
ein Hebelplattensystem (600) mit:
mindestens einer Hebelplatte (610), die betriebsbereit an mindestens einer Trägerplatte (611) an einem ersten Drehpunkt (612) befestigt ist, wobei die mindestens eine Hebelplatte (610) eine Öffnung in mindestens einer Aussparung (613) in der mindestens einen Trägerplatte (611) in einer geschlossenen Position verschließt und die Öffnung in mindestens einer Aussparung (613) in der mindestens einen Trägerplatte (611) in einer offenen Position freilegt;
mindestens einem Hebelsperrarm (620), der betriebsbereit an der mindestens einen Trägerplatte (611) an einem zweiten Drehpunkt (621) befestigt ist, der in betriebsbereitem Kontakt mit der mindestens einen Hebelplatte (610) ist, sodass der mindestens eine Hebelsperrarm (620) verhindert, dass die mindestens eine Trägerplatte (610) sich aus ihrer geschlossenen Position in ihre offene Position in einer verriegelten Stellung bewegt, und ermöglicht, dass die mindestens eine Hebelplatte (610) sich aus ihrer geschlossenen Position in ihrer offenen Position in einer entriegelten Stellung bewegt;
mindestens einer Feder (621), die betriebsbereit mit der mindestens einen Hebelplatte (610) und dem mindestens einen Hebelsperrarm (620) verbunden ist;
mindestens einem Freigabearm (640), der für einen betriebsbereiten Kontakt mit dem mindestens einen Hebelsperrarm (620) eingerichtet ist; und
einem Trommelverriegelungssystem (900) mit:
mindestens einer Seitenwand (910);
mindestens einer Trägerplatte (950);
mindestens einem Materialtragezylinder (920), der betriebsbereit mit der mindestens einer Trägerplatte (950) verbunden ist und einen Materialtragarm, der eine lineare Materialachse definiert, und mindestens eine Trommelplatte (921) aufweist, die an oder nahe an einem Ende des Materialtragarms angeordnet und betriebsbereit damit verbunden ist;
mindestens einem Verriegelungsstreifenmechanismus (930), der betriebsbereit mit der mindestens einen Trägerplatte (950) verbunden ist und einen Verriegelungsstreifen (930) und einen Spannungsstreifen (931) aufweist, die für einen betriebsbereiten Kontakt mit der mindestens einen Trommelplatte (921) eingerichtet sind; und
mindestens einem Nockenstreifen (940), der betriebsbereit mit der mindestens einen Seitenwand (910) verbunden ist und für einen betriebsbereiten Kontakt mit dem mindestens einen Verriegelungsstreifenmechanismus eingerichtet ist.

14. Wickelmechanismus nach einem der Ansprüche 1 bis 13, eingerichtet zum Reduzieren der Geschwindigkeit oder zum Anhalten der Bewegung von mindestens einem Trommelrad (921), das in der Nähe des Bremssystems (400) angeordnet ist und mindestens einer Trägerplatte (950) gegenüberliegt, zwischen denen ein Materialtragezylinder (920) zum Anbringen einer Rolle von Wickelmaterial angeordnet ist, wobei das Bremssystem zur Reduzierung der Geschwindigkeit oder zum Anhalten der Bewegung der Rolle an Wickelmaterial in einer Mehrzahl von eingerasteten und gelösten Zuständen eingerichtet ist, die aufweisen:
eine erste eingerastete Position, wobei der Hebel (430) sich in der mindestens einen eingerasteten Position befindet, die Feder (470) sich in einer aktiven Stellung befindet, das Gegenrad (441) in betriebsbereitem Kontakt mit der Rolle an Wickelmaterial ist, die Zuführungsplatte sich in der passiven Stellung befindet und der Bremsklotz (461) sich in betriebsbereitem Kontakt mit dem mindestens einen Trommelrad (462) befindet;
eine erste gelöste Position, wobei der Hebel (430) sich in der mindestens einen eingerasteten Position befindet, die Feder (470) sich in einer aktiven Stellung befindet, das Gegenrad (441) in betriebsbereitem Kontakt mit der Rolle an Wickelmaterial ist, die Zuführungsplatte sich in einer aktiven Stellung befindet und der Bremsklotz (461) nicht in betriebsbereitem Kontakt mit dem mindestens einen Trommelrad (462) ist; und
eine zweite gelöste Position, wobei der Hebel (430) sich in der mindestens einen gelösten Position befindet, die Feder (470) sich in einer mindestens einen passiven Stellung befindet, das Gegenrad (441) nicht in betriebsbereitem Kontakt mit der Rolle an Wickelmaterial ist und dass der Bremsklotz (461) nicht in betriebsbereitem Kontakt mit dem mindestens einen Trommelrad (462) ist.

15. Wickelmechanismus nach Anspruch 14, wobei die Rolle an Wickelmaterial Kontakt und Druck auf das Gegenrad (441) ausübt, wenn der Hebel (430) sich in der mindestens einen gelösten Position befindet, sodass, wenn die Rolle an Wickelmaterial ausgegeben wird, eine Druckmenge, die auf das Gegenrad (441) ausgeübt wird, verringert wird, wodurch der Bremsklotz (461) weniger Druck auf das Trommelrad (462) des Materialtragzylinders (310) ausübt, und dadurch eine schnellere Drehung der Rolle an Wickelmaterial und ein gleichmäßiges Ausgabemaß an Wickelmaterial ermöglicht.

16. Erntemaschine mit dem Wickelmechanismus nach einem der Ansprüche 1 bis 15.

17. Verfahren zum Be- und Entladen einer Rolle an Wickelmaterial auf einen Wickelmechanismus der Erntemaschine nach Anspruch 16 mit:
(a) Bewegen des Bremssystems (400) in eine gelöste Stellung;
(b) Bewegen eines Hebelplattensystems (600) in eine gelöste Stellung;
(c) Drehen von mindestens einem Materialtragezylinder (310) weg von einer Achse, auf der er sich dreht;
(d) Be- oder Entladen einer Rolle an Wickelmaterial auf den mindestens einen Materialtragezylinder (310).

## Revendications

1. Mécanisme d'emballage (300) comprenant :
- au moins deux cylindres de support de matériau (310), s'étendant entre une première et une seconde plaque de support (330) et en contact fonctionnel avec au moins une des première et seconde plaques de support (330), les au moins deux cylindres de support de matériau (310) étant montés en rotation autour d'un axe de support (340),
- un cylindre de support de mécanisme (320) relié fonctionnellement aux première et seconde plaques de support (330) et positionné sur l'axe de support (340) entre les première et seconde plaques de support (330) autour duquel les au moins deux cylindres de support de matériau (310) tournent dans une pluralité de positions radiales,
- au moins un mécanisme d'entraînement relié fonctionnellement à au moins la première plaque de support (330) de telle sorte que le mécanisme d'entraînement permet de faire tourner les au moins deux cylindres de support de matériau (310) depuis une première position radiale jusqu'à l'une des plusieurs positions radiales autour de l'axe de support (340),
- une paire de plaques de châssis opposées (301), un mécanisme de verrouillage (370), au moins un rouleau d'alimentation (350), et une plaque d'alimentation, les au moins deux cylindres de support de matériau (310) étant fixés fonctionnellement à au moins la première plaque de support (330), les au moins deux cylindres de support de matériau (310) étant conçus pour supporter des rouleaux de matériau d'emballage et/ou facultativement charger ou décharger un rouleau de matériau d'emballage à la première position radiale autour de l'axe de support (340), et au moins une position radiale du au moins un cylindre de support de matériau (310) étant configurée pour distribuer du matériau d'emballage, **caractérisé en ce que** le mécanisme d'emballage comprend en plus un système de frein (360, 400) comprenant :
au moins un élément allongé (410) comprenant un axe longitudinal, qui définit un axe linéaire (411) autour duquel au moins un premier, un second, et un troisième éléments non coaxiaux (440, 450 et 460) sont capables de se déplacer,
au moins un élément coaxial qui est capable de tourner autour de l'axe linéaire (411),
un levier (430), actionnable dans au moins une position engagée et au moins une ou plusieurs positions désengagées, comprenant au moins une première et une seconde extrémité, ladite première extrémité étant proche de et en contact fonctionnel avec l'élément allongé (410), conçu pour effectuer un mouvement de rotation de l'élément allongé (410) dans la une ou plusieurs positions désengagées,
le premier élément non coaxial (440) s'étendant transversalement à partir de l'axe linéaire (411) et étant fixé à au moins une roue de contre-poussée (441) conçue pour exercer un contact et une pression sur un rouleau de matériau d'emballage,
le second élément non coaxial (450) s'étendant transversalement à partir de l'axe linéaire (411) comprenant au moins une extrémité liée fonctionnellement au au moins un élément coaxial (420),
le troisième élément non coaxial (460) s'étendant transversalement à partir de l'axe linéaire (411), positionné au niveau ou à proximité d'une extrémité du au moins un élément coaxial (420) et lié fonctionnellement à celui-ci et relié fonctionnellement à au moins un patin de frein (461), et
un ressort (470), positionné entre les premier et second éléments non coaxiaux (440, 450), reliant fonctionnellement au moins une extrémité des premier et second éléments non coaxiaux.

2. Mécanisme d'emballage selon la revendication 1, dans lequel le ressort (470) comprend une pluralité de positions actives et au moins une position non active, le ressort (470), dans au moins une position active, maintenant une tension entre le premier et le second éléments non coaxiaux (440, 450) de telle sorte que le déplacement ou le mouvement dans le premier élément coaxial (440) est transféré au second élément non coaxial (450), et, dans au moins la première position non active, le ressort (470) relâche la tension entre le premier et le second éléments non coaxiaux (440, 450).

3. Mécanisme d'emballage selon l'une quelconque des revendications 1 ou 2 comprenant en plus un élément en forme de crochet (480) lié fonctionnellement à une extrémité du au moins un élément coaxial (420) et comprenant au moins un élément courbé (481) et au moins un élément droit (482).

4. Mécanisme d'emballage selon l'une quelconque des revendications 1 à 3, dans lequel le au moins un élément courbé (481) de l'élément en forme de crochet (480) est fixé à une plaque d'alimentation capable de se déplacer entre une position active et passive, la position active de la plaque d'alimentation applique une tension sur l'élément en forme de crochet (480) de telle sorte que le au moins un élément coaxial (420) tourne autour de l'axe linéaire (411), et la position passive de la plaque d'alimentation n'applique pas de tension ou applique une tension limitée de telle sorte que le au moins un élément coaxial (420) ne tourne pas autour de l'axe linéaire (411).

5. Mécanisme d'emballage selon l'une quelconque des revendications 1-4, dans lequel le au moins un élément coaxial (420) est relié fonctionnellement au second élément non coaxial (450) et au troisième élément non coaxial (460), et en ce que le au moins un élément non coaxial (420), le second élément non coaxial (450) et le troisième élément non coaxial (460) peuvent tourner de façon synchronisée autour de l'axe linéaire (411).

6. Mécanisme d'emballage selon l'une quelconque des revendications 1 - 5, dans lequel, le levier (430) est dans au moins une position engagée, la au moins une roue de contre-poussée (441) exerce une pression et une tension sur un rouleau de matériau d'emballage positionné à proximité de la roue de contre-poussée (441), et le au moins patin de frein (461) exerce un contact et une pression sur une roue de tambour (462) positionnée à proximité du patin de frein (461).

7. Mécanisme d'emballage selon la revendication 6, dans lequel, quand le levier (430) est dans au moins une position engagée et la plaque d'alimentation est dans une position active, le au moins un patin de frein (461) n'exerce pas de contact et pas de pression sur une roue de tambour (462) positionnée à proximité du patin de frein (461).

8. Mécanisme d'emballage selon l'une quelconque des revendications 6 ou 7, dans lequel, quand le levier (430) est dans au moins une position engagée ou dans plusieurs positions désengagées, la au moins une roue de contre-poussée (441) n'exerce pas de poussée ni de pression sur un rouleau de matériau d'emballage positionné à proximité de la roue de contre-poussée (441), et le au moins un patin de frein (461) n'exerce pas de contact ni de pression sur une roue de tambour (462) positionnée à proximité du patin de frein (461).

9. Mécanisme d'emballage selon la revendication 8, dans lequel, quand le levier (430) se déplace de la au moins une position engagée jusqu'à la une ou plusieurs positions désengagées, la au moins une roue de contre-poussée (441) se déplace radialement autour de l'axe linéaire (411).

10. Mécanisme d'emballage selon l'une quelconque des revendications 8 ou 9, dans lequel, quand le levier (430) se déplace de la au moins une position engagée jusqu'à la une ou plusieurs positions désengagées ou lorsque la plaque d'alimentation est dans la position active, le au moins un patin de frein (461) pivote autour de l'axe linéaire (411).

11. Mécanisme d'emballage selon l'une quelconque des revendications 8 - 10, comprenant en plus un quatrième élément non coaxial (640) s'étendant transversalement à partir de l'axe linéaire, comprenant au moins une extrémité qui est fixée fonctionnellement à au moins un élément allongé (641), le quatrième élément non coaxial étant capable d'effectuer un mouvement radial autour de l'axe linéaire lorsque le levier (642) est déplacé de la au moins une position engagée jusqu'à la une ou plusieurs positions désengagées.

12. Mécanisme d'emballage selon l'une quelconque des revendications 1-11, comprenant en plus un système de verrouillage de tambour (900) comprenant :
au moins une paroi latérale (910),
au moins une plaque de support (950),
au moins un cylindre de support de matériau (920), relié fonctionnellement à la au moins une plaque de support (950), comprenant un bras de support de matériau qui définit un axe linéaire de matériau, et au moins un plateau de tambour (921) positionné à ou à proximité d'une extrémité du bras de support de matériau et lié fonctionnellement à celui-ci,
au moins un mécanisme de patte de verrouillage (930), relié fonctionnellement à la au moins une plaque de support (950), comprenant une patte de verrouillage (930) et une patte de tension (931), conçu pour un contact fonctionnel avec le au moins un plateau de tambour (921), et
au moins une patte de came (940), reliée fonctionnellement à la au moins une paroi latérale (910), et conçue pour un contact fonctionnel avec le au moins un mécanisme de patte de verrouillage.

13. Mécanisme d'emballage selon l'une quelconque des revendications 1-11, comprenant en plus :
* un système de plaque à levier (600) comprenant :
au moins une plaque à levier (610) fixée fonctionnellement à au moins une plaque de support (611) au niveau d'un premier point de pivot (612), la au moins une plaque à levier (610) recouvrant une ouverture dans au moins une échancrure (613) dans la au moins une plaque de support (611) dans une position fermée et découvrant l'ouverture dans au moins une échancrure (613) dans la au moins une plaque de support (611) dans une position ouverte,
au moins un bras de verrouillage de levier (620), fixé fonctionnellement à la au moins une plaque de support (611) au niveau d'un second point de pivot (621), qui est en contact fonctionnel avec la au moins une plaque à levier (610) de telle sorte que le au moins un bras de verrouillage de levier (620) empêche, dans sa position verrouillée, la au moins une plaque à levier (610) de se déplacer de sa position fermée jusqu'à sa position ouverte, et permet, dans sa position déverrouillée, à la au moins une plaque à levier (610) de se déplacer de sa position fermée jusqu'à sa position ouverte,
au moins un ressort (621), connecté fonctionnellement à la au moins une plaque à levier (610) et à au moins un bras de verrouillage de levier (620),
au moins un bras de déverrouillage (640) conçu pour un contact fonctionnel avec le au moins un bras de verrouillage de levier (620), et
* un système de verrouillage de tambour (900) comprenant :
au moins une paroi latérale (910),
au moins une plaque de support (950),
au moins un cylindre de support de matériau (920), relié fonctionnellement à la au moins une plaque de support (950), comprenant un bras de support de matériau qui définit un axe linéaire de matériau, et au moins un plateau de tambour (921) positionné à ou à proximité d'une extrémité du bras de support de matériau et lié fonctionnellement à celui-ci,
au moins un mécanisme de patte de verrouillage (930), relié fonctionnellement à la au moins une plaque de support (950), comprenant une patte de verrouillage (930) et une patte de tension (931), conçu pour un contact fonctionnel avec le au moins un plateau de tambour (921), et
au moins une patte de came (940), reliée fonctionnellement à la au moins une paroi latérale (910), et conçue pour un contact fonctionnel avec le au moins un mécanisme de patte de verrouillage.

14. Mécanisme d'emballage selon l'une quelconque des revendications 1 - 13 conçu pour réduire la vitesse ou arrêter le déplacement d'au moins une roue de tambour (921) positionnée à proximité du système de frein (400) et orientée à l'opposé d'au moins une plaque de support (950) entre lesquelles un cylindre de support de matériau (920) est positionné pour y monter un rouleau de matériau d'emballage, dans lequel le système de frein est conçu pour réduire la vitesse ou arrêter le déplacement du rouleau de matériau d'emballage dans une pluralité de positions engagées et désengagées comprenant :
une première position engagée dans laquelle le levier (430) est dans la au moins une position engagée, le ressort (470) est dans une position active, la roue de contre-poussée (441) est en contact fonctionnel avec le rouleau de matériau d'emballage, la plaque d'alimentation est dans la position passive, et le patin de frein (461) est en contact fonctionnel avec la au moins une roue de tambour (462),
une première position désengagée dans laquelle le levier (430) est dans la au moins une position engagée, le ressort (470) est dans une position active, la roue de contre-poussée (441) est en contact fonctionnel avec le rouleau de matériau d'emballage, la plaque d'alimentation est dans la position active, et le patin de frein (461) n'est en contact fonctionnel avec la au moins une roue de tambour (462),
une seconde position désengagée dans laquelle le levier (430) est dans la au moins une position désengagée, le ressort (470) est dans une position passive, la roue de contre-poussée (441) n'est en contact fonctionnel avec le rouleau de matériau d'emballage, et le patin de frein (461) n'est pas en contact fonctionnel avec la au moins une roue de tambour (462),

15. Mécanisme d'emballage selon la revendication 14, dans lequel le rouleau de matériau d'emballage exerce un contact et une pression sur la roue de contre-poussée (441) lorsque le levier (430) est dans la au moins une position engagée de telle sorte que, lorsque le rouleau de matériau d'emballage est en train d'être distribué, la pression exercée sur la roue de contre-poussée (441) est diminuée, en faisant diminuer la pression exercée par le patin de frein (461) sur la roue de tambour (462) du cylindre de support de matériau (310), et en permettant une rotation plus rapide du rouleau de matériau d'emballage et une quantité constante de distribution de matériau d'emballage.

16. Machine de récolte comprenant le mécanisme d'emballage selon l'une quelconque des revendications 1 à 15.

17. Procédé pour charger et décharger un rouleau de matériau d'emballage sur un mécanisme d'emballage de la machine de récolte selon la revendication 16, comprenant les étapes consistant à :
(a) déplacer le système de frein (400) jusqu'à une position désengagée,
(b) déplacer un système de plaque à levier (600) jusqu'à une position désengagée,
(c) pivoter au moins un cylindre de support de matériau (310) à distance d'un axe de rotation sur lequel il tourne,
(d) charger ou décharger un rouleau de matériau d'emballage sur le au moins un cylindre de support (310) de matériau.
